# EUROPÄISCHE PATENTANMELDUNG

(11) **EP 4 563 457 A1**
(43) Veröffentlichungstag der Anmeldung: **04.06.2025**
(21) Anmeldenummer: 24211671.3
(22) Anmeldetag: 08.11.2024
(51) Int. Cl.: B63H 20/00, H02K 5/08, H02K 5/132, H02K 5/15, H02K 5/16, H02K 5/167, H02K 5/173

(54) **ANTRIEBSEINHEIT FÜR EINEN ELEKTRISCHEN AUSSENBORDMOTOR**

(30) Priorität: 10.11.2023 DE 102023131250
(71) Anmelder: Torqeedo GmbH, 82234 Weßling (DE)
(72) Erfinder: Spengler, Anton, 82234 Weßling (DE); Stricker, Marcel, 82234 Weßling (DE)
(74) Vertreter: Nordmeyer, Philipp Werner

(57) **Zusammenfassung**

Antriebseinheit (1) und Heckkappe (30) für eine Antriebseinheit (10) eines elektrischen Außenbordmotors (1), wobei die Heckkappe (30) eine Komponente eines Gehäuses (20) der Antriebseinheit (10) ausbildet und aufweist: einen Deckabschnitt (32), der das Gehäuse (20) heckseitig abschließt und eine Propellerwellenöffnung (31) aufweist, die eine Axialrichtung (A) definiert und durch welche eine Propellerwelle (11) der Antriebseinheit (10) aus dem Gehäuse (20) nach außen führbar ist; und einen hohlzylindrischen Montageabschnitt (35), der in Axialrichtung (A) gesehen auf der von der Propellerwellenöffnung (31) abgewandten Seite angeordnet ist; wobei der Montageabschnitt (35) eine zylindrische Montagefläche (37) mit einem Montagegewinde (36) aufweist, durch welches die Heckkappe (30) als Ganzes auf ein entsprechendes gehäuseseitiges Gewinde (22a) des Gehäuses (20) aufschraubbar ist.

## Beschreibung

### Technisches Gebiet

Die vorliegende Erfindung betrifft eine Antriebseinheit für einen elektrischen Bootsantrieb, beispielsweise für einen Außenbordmotor oder für einen Pod_Antrieb, insbesondere eine Heckkappe für eine solche Antriebseinheit.

### Stand der Technik

Auf dem Gebiet der Bootsantriebe sind Außenbordmotoren oder Pod-Antriebe mit elektrischem Antrieb bekannt. Elektroantriebe weisen gegenüber Verbrennungsmotoren einige Vorteile auf. So sind Elektro-Außenbordmotoren im Betrieb sehr leise und geben keine Abgase in die Umwelt ab. Verunreinigungen des Wassers während des Betankens oder unbeabsichtigt entweichendes Öl können ausgeschlossen werden.

Die Antriebseinheit eines solchen Außenbordmotors kann ein mehrteiliges Gehäuse aufweisen, etwa um die Antriebseinheit öffnen und warten zu können. Hierbei ist es üblich, dass die Antriebseinheit eine auf der Seite des Propellers angeordnete Heckkappe aus Metall aufweist, die mechanisch bearbeitet, beschichtet und mit Schrauben am Gehäuse der Antriebseinheit befestigt ist.

Die Mehrteiligkeit des Gehäuses der Antriebseinheit kann, sofern unterschiedliche metallische Werkstoffe verwendet werden, beim Kontakt mit Wasser, insbesondere Meerwasser, zu galvanischer Korrosion führen. Zudem ist der Montageprozess der Heckkappe aufwändig, da sowohl eine Anzahl an Schrauben zu befestigen als auch die Axialität der Heckkappe relativ zum Gehäuse sicherzustellen ist.

### Darstellung der Erfindung

Eine Aufgabe der Erfindung besteht darin, eine verbesserte Antriebseinheit für einen elektrischen Außenbordmotor oder einen Pod-Antrieb, insbesondere eine verbesserte Heckkappe für eine solche Antriebseinheit bereitzustellen.

Die Aufgabe wird durch eine Heckkappe mit den Merkmalen des Anspruchs 1 sowie eine Antriebseinheit mit den Merkmalen des Anspruchs 11 gelöst. Vorteilhafte Weiterbildungen folgen aus den Unteransprüchen, der folgenden Darstellung der Erfindung sowie der Beschreibung bevorzugter Ausführungsbeispiele.

Die Heckkappe gemäß der Erfindung ist für eine Antriebseinheit eines elektrischen Außenbordmotors oder eines Pod-Antriebs konzipiert. Die Heckkappe bildet hierbei eine Komponente eines Gehäuses der Antriebseinheit aus, insbesondere auf der Propellerseite der Antriebseinheit. Die Propellerseite der Antriebseinheit ist hierin auch als "heckseitig" bezeichnet.

Die Heckkappe weist einen Deckabschnitt auf, der das Gehäuse heckseitig abschließt. Der Deckabschnitt weist eine Propellerwellenöffnung auf, die eine Axialrichtung definiert und durch die eine Propellerwelle der Antriebseinheit, die sich in der Axialrichtung erstreckt, aus dem Gehäuse nach außen führbar ist. Die Antriebseinheit weist ferner einen hohlzylindrischen Montageabschnitt auf, der in Axialrichtung gesehen auf der von der Propellerwellenöffnung abgewandten Seite angeordnet ist. Der Montageabschnitt erstreckt sich als zylindrische Wandung am Außenumfang des Deckabschnitts. Die Heckkappe hat somit eine Schüsselform, deren Boden vom Deckabschnitt gebildet und am Außenumfang vom Montageabschnitt umrandet ist.

Der Montageabschnitt weist eine zylindrische Montagefläche mit einem Montagegewinde auf, durch welches die Heckkappe als Ganzes auf ein entsprechendes gehäuseseitiges Gewinde des Gehäuses aufschraubbar ist. Die Lage der Montagefläche entspricht vorzugsweise dem Nenndurchmesser des Montagegewindes, d.h. dem größten Durchmesser des Montagegewindes.

Die Montage der vorstehend beschriebenen Heckkappe kommt durch das integrierte Montagegewinde ohne zusätzliche Befestigungsmittel, wie etwa Schrauben usw., aus. Der Montageprozess wird dadurch beschleunigt und ist sicher durchführbar. Das Montagegewinde stellt zudem als synergetische Funktion eine Abdichtung gegen das Eindringen von Wasser oder anderen äußeren Medien in die Antriebseinheit bereit.

Vorzugsweise ist das Montagegewinde als Innengewinde ausgeführt und sitzt so auf der Montagefläche des Montageabschnitts, dass sich die Flanken des Montagegewindes als Vorsprünge von der Montagefläche in das Innere des hohlzylindrischen Montageabschnitts erstrecken. Auf diese Weise werden die Handhabung und Montagefähigkeit der Heckkappe weiter verbessert.

Vorzugsweise weist der Montageabschnitt neben der Montagefläche, in Axialrichtung in Richtung Deckabschnitt gesehen (d.h. heckseitig), eine zylindrische Zentrierfläche auf, die eingerichtet ist, um während der Montage der Heckkappe eine Zentrierung relativ zum Gehäuse zu gewährleisten, indem die Zentrierfläche einen Formschluss mit einer entsprechenden gehäuseseitigen Zentrierfläche des Gehäuses eingeht. Die Integration der Zentrierfläche in den Montageabschnitt erhöht die Zuverlässigkeit des Montageprozesses, insbesondere im Hinblick auf die Axialität der Heckkappe relativ zum übrigen Gehäuse.

Vorzugsweise ist der Durchmesser der Zentrierfläche, im Querschnitt senkrecht zur Axialrichtung gesehen, kleiner als der entsprechende Durchmesser der Montagefläche, wodurch die Zentrierfunktion optimiert wird. Besonders bevorzugt entspricht der Durchmesser der Zentrierfläche, im Querschnitt senkrecht zur Axialrichtung gesehen, dem Kerndurchmesser des Montagegewindes, d.h. die beiden Durchmesser sind in diesem Fall im Wesentlichen identisch. Indem die Zentrierfläche sich ungefähr auf dem Niveau des Kerndurchmessers des Montagegewindes befindet, wird die Zentrierfunktion maximiert.

Vorzugsweise weist der Montageabschnitt neben der Montagefläche, in Axialrichtung gegenüber dem Deckabschnitt gesehen (d.h. gehäuseseitig), eine zylindrische Dichtungsfläche auf, die zur Abdichtung des Gehäuses vorgesehen und eingerichtet ist, indem zwischen der Dichtungsfläche und einem entsprechenden Dichtungssitz des Gehäuses eine Gehäusedichtung installierbar ist. Die Gehäusedichtung ist vorzugsweise als O-Ring ausgeführt. Auf diese Weise werden die Heckkappe und das übrige Gehäuse zuverlässig abgedichtet, um zu verhindern, dass Wasser oder andere äußere Medien in das Innere der Antriebseinheit gelangen.

Vorzugsweise ist der Durchmesser der Dichtungsfläche, im Querschnitt senkrecht zur Axialrichtung gesehen, größer als der entsprechende Durchmesser der Montagefläche, wodurch die Gehäusedichtung und das Montagegewinde gemeinsam für eine Abdichtung sorgen.

Vorzugsweise weist die Propellerwellenöffnung einen Dichtungssitz zur Aufnahme einer Wellendichtung zur Abdichtung gegen die Propellerwelle und/oder einen Lagersitz zur Aufnahme eines Lagers, vorzugsweise Wälzlagers, zur drehbaren Lagerung der Propellerwelle auf, wobei der Dichtungssitz vorzugsweise einen kleineren Durchmesser aufweist als der Lagersitz, im Querschnitt senkrecht zur Axialrichtung gesehen. Durch die Integration des Lagersitzes und/oder Dichtungssitzes in die Heckkappe, kann die Antriebseinheit besonders kompakt aufgebaut sein. Vorzugsweise ist die Heckkappe rotationssymmetrisch aufgebaut, wodurch die Montagefähigkeit und Fertigung der Heckkappe weiter verbessert werden.

Vorzugsweise ist die Heckkappe aus einem Kunststoff gefertigt, wodurch das Risiko von Korrosion, insbesondere einer galvanischen Korrosion durch Metallpaarungen, beseitigt wird. Ferner resultieren eine Kostenreduzierung und Gewichtsreduzierung aus der Anwendung eines im Vergleich etwa zu Metall-Druckgussteilen leichteren Kunststoffs. Auf eine Beschichtung der Heckkappe beispielsweise zur Vermeidung von Korrosion kann verzichtet werden.

Um Montageaufwand, Gewicht und Kosten weiter zu reduzieren, ist die Heckkappe vorzugsweise einteilig bzw. einstückig gefertigt.

Die oben genannte Aufgabe wird ferner durch eine Antriebseinheit für einen elektrischen Außenbordmotor gelöst, wobei die Antriebseinheit aufweist: ein Gehäuse mit einer Heckkappe nach einem der vorstehend dargelegten Ausführungsvarianten; einen im Gehäuse angeordneten Elektromotor sowie eine vom Elektromotor rotatorisch anzutreibende Propellerwelle, die sich in der Axialrichtung im Gehäuse und durch die Propellerwellenöffnung abschnittsweise nach außen erstreckt.

Die Merkmale, technischen Wirkungen, Vorteile sowie Ausführungsbeispiele, die in Bezug auf die Heckkappe beschrieben wurden, gelten analog für die Antriebseinheit.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine perspektivische Außenansicht einer elektrischen Antriebseinheit für einen Außenbordmotor gemäß einem Ausführungsbeispiel;
- Figur 2: eine Schnittansicht des hinteren Abschnitts der Antriebseinheit mit aufgeschraubter Heckkappe;
- Figur 3: eine perspektivische Ansicht der Heckkappe; und
- Figur 4: ein vergrößerter Ausschnitt aus der Schnittansicht der Figur 2 zur Veranschaulichung der Zentrierung der Heckkappe.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

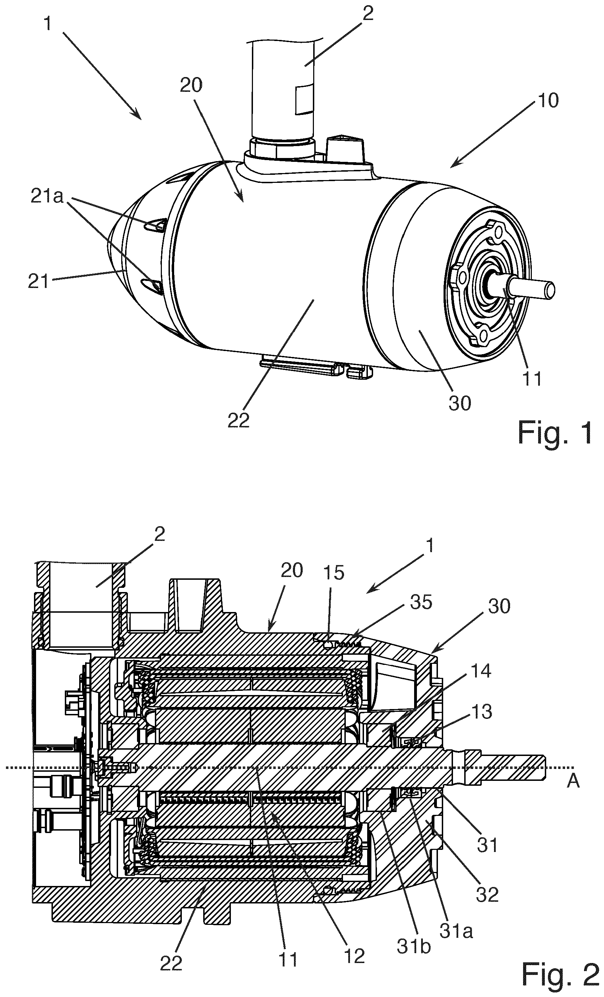

Die Figur 1 zeigt eine perspektivische Außenansicht einer elektrischen Antriebseinheit 10 für einen Außenbordmotor 1 gemäß einem Ausführungsbeispiel. Der Außenbordmotor 1 ist in der Figur 1 ausschnittsweise gezeigt, wobei der Schaft 2 zu sehen ist, an dem die Antriebseinheit 10 befestigt ist. Bootsseitige Komponente, umfassend beispielsweise einen Akkumulator, sind in der Figur 1 nicht gezeigt. Die Antriebseinheit 10 befindet sich im Normalbetrieb unterhalb der Wasseroberfläche.

Die Antriebseinheit 10 kann auch Teil eines Pod-Antriebs sein und ist dann im Normalbetrieb ebenfalls unterhalb der Wasseroberfläche angeordnet.

Die Antriebseinheit 10 weist ein Gehäuse 20 auf, das im vorliegenden Ausführungsbeispiel im Wesentlichen dreiteilig aufgebaut ist, umfassend einen kuppelförmigen, vorderen Gehäuseabschnitt 21, einen zylindrischen, mittleren Gehäuseabschnitt 22 und eine Heckkappe 30. Die Gesamtform des Gehäuses 20 ist vorzugsweise strömungsdynamisch optimiert, wodurch es insbesondere eine längliche, abgerundete, leicht tropfenförmige oder pylonenförmige Geometrie aufweisen kann. Im vorliegenden Ausführungsbeispiel ist das Gehäuse 20 insgesamt und sind die Gehäuseabschnitte 21, 22, 30 im Wesentlichen rotationssymmetrisch aufgebaut.

Der vordere Gehäuseabschnitt 21 ist als Frontkappe vorzugsweise aus Kunststoff gefertigt und vorzugsweise mit einem Innengewinde versehen, um direkt in den mittleren Gehäuseabschnitt 22 eingeschraubt werden zu können. Zu diesem Zweck kann der vordere Gehäuseabschnitt 21 Vertiefungen 21a aufweisen, die als Angriffspunkte für ein Werkzeug fungieren, um den vorderen Gehäuseabschnitt 21 festzuschrauben. Alternativ können der vordere Gehäuseabschnitt 21 und/oder der mittlere Gehäuseabschnitt 22 aus einem metallischen Werkstoff, beispielsweise in Form von Metall-Druckgussteilen, gefertigt sein.

Die Heckkappe 30, die das Gehäuse 20 heckseitig, d.h. propellerseitig abschließt, ist vorzugsweise aus einem Kunststoff gefertigt.

In dem Gehäuse 20 erstreckt sich in einer Axialrichtung eine Propellerwelle 11, die in der Heckkappe 30 gelagert ist und abschnittsweise aus dem Gehäuse 20 heraustritt. Am heckseitigen Endabschnitt der Propellerwelle 11 ist im regulären Betrieb ein Propeller befestigt, der in den Figuren nicht gezeigt ist.

Zum Antrieb der Propellerwelle 11 weist die Antriebseinheit 10 einen Elektromotor 12 auf, vgl. Figur 2. Der Elektromotor 12 ist vorzugsweise ein Synchronmotor. Der Elektromotor 12 fungiert im vorliegenden Ausführungsbeispiel als Direktantrieb, d.h. der Elektromotor 12 überträgt das erzeugte Drehmoment ohne Getriebe unmittelbar auf die Propellerwelle 11. Allerdings ist die Verwendung eines Getriebes, einer Kupplung usw. nicht ausgeschlossen.

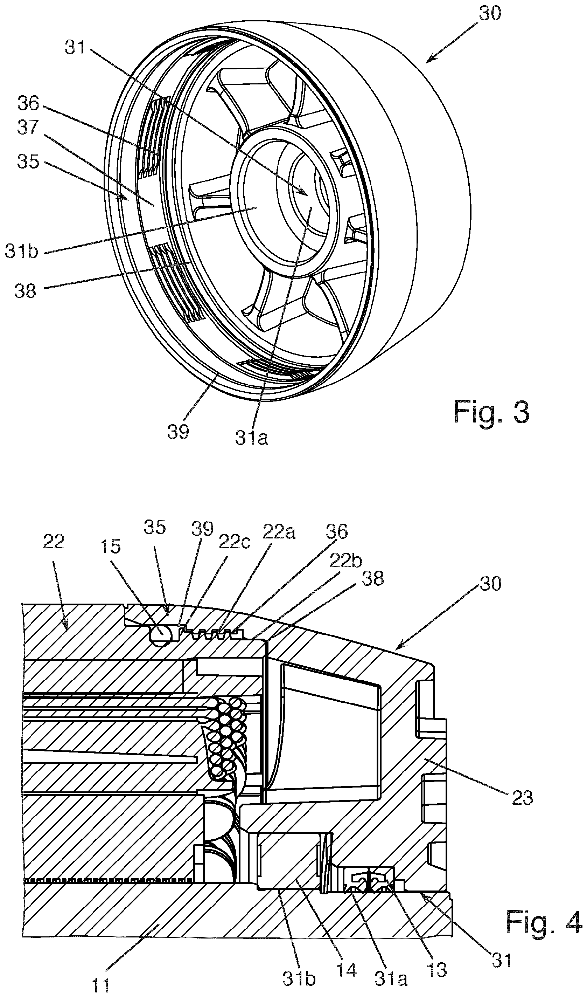

Die Figur 3 zeigt eine perspektivische Ansicht der Heckkappe 30. Die Heckkappe 30 ist ein rotationssymmetrisches, kegelstumpfförmiges oder zylindrisches Objekt, das heckseitig, d.h. propellerseitig bis auf eine zentrale Propellerwellenöffnung 31, durch welche sich die Propellerwelle 11 aus dem Gehäuse 20 der Antriebseinheit 10 nach außen erstreckt, durch einen Deckabschnitt 32 (vgl. Figur 2) geschlossen ist. Durch die rotationssymmetrische Form der Heckkappe 30 ist eine Axialrichtung A definiert, die mit der axialen Erstreckung der Propellerwelle 11 zusammenfällt. Die Heckkappe 30 weist heckseitig den Deckabschnitt 32 auf, der das Gehäuse 20 propellerseitig abschließt. Der Deckabschnitt 32 bildet oder umfasst die Deckfläche des "Kegelstumpfs" und ist bis auf die Propellerwellenöffnung 31 geschlossen, während die Heckkappe 30 auf der der Propellerwellenöffnung 31 abgewandten Seite eher hohlzylindrisch ausgebildet und für die Montage mit dem mittleren Gehäuseabschnitt 22 offen ist.

Die Propellerwellenöffnung 31 umfasst einen Dichtungssitz 31a. Im montierten Zustand der Antriebseinheit 10 ist eine Wellendichtung 13 zwischen Dichtungssitz 31a und Propellerwelle 11 angeordnet, vgl. auch Figur 2. Die Wellendichtung 13 verhindert, dass Wasser oder andere äußere Medien in die Antriebseinheit 10 gelangen. Die Propellerwellenöffnung 31 umfasst ferner einen Lagersitz 31b, in dem im montierten Zustand der Antriebseinheit ein Lager 14, insbesondere Wälzlager, zur drehbaren Lagerung der Propellerwelle 11 angeordnet ist, vgl. auch Figur 2. Der Lagersitz 31b der Propellerwelle 11 sitzt somit in der Heckkappe 30. Vorzugsweise weist der Dichtungssitz 31a einen kleineren Durchmesser auf als der Lagersitz 31b auf.

Auf der von der Propellerwellenöffnung 31 abgewandten Seite weist die Heckkappe 30 einen hohlzylindrischen Montageabschnitt 35 zur Verbindung mit dem mittleren Gehäuseabschnitt 22 auf.

Der Montageabschnitt 35 weist ein Montagegewinde 36 auf, das mit einem entsprechenden gehäuseseitigen Gewinde 22a des mittleren Gehäuseabschnitts 22 zusammenwirkt, vgl. Figur 4. Somit kann die Heckkappe 30 als Ganzes auf einen heckseitigen Endabschnitt des mittleren Gehäuseabschnitts 22 aufgeschraubt werden.

Das Montagegewinde 36 ist vorzugsweise als Innengewinde ausgeführt und sitzt auf einer zylindrischen Montagefläche 37 des Montageabschnitts 35, so dass sich dessen Flanken bzw. Zähne als Vorsprünge von der Montagefläche 37 nach innen, d.h. Richtung Propellerwelle 11 erstrecken. Zudem muss sich das Montagegewinde 36 nicht vollständig rundherum über die Montagefläche 37 erstrecken, sondern das Montagegewinde 36 kann, wie im vorliegenden Ausführungsbeispiel der Figur 3 gezeigt, abschnittsweise in Gruppen entlang des Umfangs vorgesehen sein.

Heckseitig schließt sich an die zylindrische Montagefläche 37 eine ebenfalls zylindrische Zentrierfläche 38 an, in Axialrichtung A gesehen, die eingerichtet ist, um während der Montage eine Zentrierung der Heckkappe 30 relativ zum mittleren Gehäuseteil 22 zu gewährleisten. Die Montagefläche 37 und die Zentrierfläche 38 sind Innenflächen des hohlzylindrischen Montageabschnitts 35. Die Zentrierfläche 38 weist vorzugsweise einen geringeren radialen Abstand von der Propellerwelle 11 auf als die Montagefläche 37. In anderen Worten, der Durchmesser 37 der Zentrierfläche 38, im Querschnitt senkrecht zur Axialrichtung A gesehen, ist vorzugsweise kleiner als der Durchmesser der Montagefläche 37, ebenfalls im Querschnitt senkrecht zur Axialrichtung A gesehen. Der Durchmesser der Zentrierfläche 38, im Querschnitt senkrecht zur Axialrichtung A gesehen, entspricht vorzugsweise dem Kerndurchmesser des Montagegewindes 36, d.h. dem kleinsten Durchmesser der Innengewindegeometrie.

Die Zentrierfläche 38 geht während der Montage der Heckkappe 30 einen Formschluss mit einer entsprechenden gehäuseseitigen Zentrierfläche 22b des mittleren Gehäuseabschnitts 22 ein, wie in der Figur 4 gezeigt, wodurch die Axialität der Heckkappe 30 relativ zum mittleren Gehäuseteil 22 gewährleistet ist.

Auf der dem mittleren Gehäuseabschnitt 22 zugewandten Seite des Montageabschnitts 35 schließt sich, in Axialrichtung A gesehen, eine Dichtungsfläche 39 an, deren Durchmesser, im Querschnitt senkrecht zur Axialrichtung A gesehen, vorzugsweise größer als der entsprechende Durchmesser der Montagefläche 37 ist. Zwischen der Dichtungsfläche 39 und einem entsprechenden Dichtungssitz 22c des mittleren Gehäuseteils 22 ist eine Gehäusedichtung 15, vorzugsweise als O-Ring ausgeführt, installiert, um die Heckkappe 30 und den mittleren Gehäuseabschnitt 22 zueinander abzudichten.

Die Heckkappe 30, umfassend den Deckabschnitt 32, den Montageabschnitt 35, das Montagegewinde 36, die Montagefläche 37, die Zentrierfläche 38 und die Dichtungsfläche 39, ist aus Kunststoff und vorzugsweise einstückig bzw. einteilig ausgebildet.

Die Montage der vorstehend beschriebenen Heckkappe 30 kommt durch das integrierte Montagegewinde ohne zusätzliche Befestigungsmittel, wie etwa Schrauben usw., aus. Der Montageprozess wird beschleunigt. Die Integration der Zentrierfläche 38 erhöht zudem die Zuverlässigkeit des Montageprozesses, insbesondere im Hinblick auf die Axialität der Heckkappe 30 relativ zum übrigen Gehäuse 20.

Indem die Heckkappe 30 aus einem Kunststoff gefertigt ist, wird das Risiko von Korrosion, insbesondere einer galvanischen Korrosion durch Metallpaarungen, beseitigt. Ferner resultieren eine Kostenreduzierung und Gewichtsreduzierung aus der Anwendung eines im Vergleich etwa zu Metall-Druckgussteilen leichteren Kunststoffs. Auf eine Beschichtung der Heckkappe beispielsweise zur Vermeidung von Korrosion kann verzichtet werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Außenbordmotor
- 2: Schaft
- 10: Elektrische Antriebseinheit
- 11: Propellerwelle
- 12: Elektromotor
- 13: Wellendichtung
- 14: Lager
- 15: Gehäusedichtung
- 20: Gehäuse
- 21: Vorderer Gehäuseabschnitt
- 21a: Vertiefung
- 22: Mittlerer Gehäuseabschnitt
- 22a: Gehäuseseitiges Gewinde
- 22b: Gehäuseseitige Zentrierfläche
- 22c: Dichtungssitz
- 30: Heckkappe
- 31: Propellerwellenöffnung
- 31a: Dichtungssitz
- 31b: Lagersitz
- 32: Deckabschnitt
- 35: Montageabschnitt
- 36: Montagegewinde
- 37: Montagefläche
- 38: Zentrierfläche
- 39: Dichtungsfläche

- A: Axialrichtung

## Patentansprüche

1. Heckkappe (30) für eine Antriebseinheit (10) eines elektrischen Außenbordmotors (1) oder eines Pod-Antriebs, wobei die Heckkappe (30) eine Komponente eines Gehäuses (20) der Antriebseinheit (10) ausbildet und aufweist:
einen Deckabschnitt (32), der das Gehäuse (20) heckseitig abschließt und eine Propellerwellenöffnung (31) aufweist, die eine Axialrichtung (A) definiert und durch welche eine Propellerwelle (11) der Antriebseinheit (10) aus dem Gehäuse (20) nach außen führbar ist; und
einen hohlzylindrischen Montageabschnitt (35), der in Axialrichtung (A) gesehen auf der von der Propellerwellenöffnung (31) abgewandten Seite angeordnet ist; wobei
der Montageabschnitt (35) eine zylindrische Montagefläche (37) mit einem Montagegewinde (36) aufweist, durch welches die Heckkappe (30) als Ganzes auf ein entsprechendes gehäuseseitiges Gewinde (22a) des Gehäuses (20) aufschraubbar ist.

2. Heckkappe (30) nach Anspruch 1, **dadurch gekennzeichnet, dass** das Montagegewinde (36) als Innengewinde ausgeführt ist und so auf der Montagefläche (37) des Montageabschnitts (35) sitzt, dass sich die Flanken des Montagegewindes (36) als Vorsprünge von der Montagefläche (37) in das Innere des hohlzylindrischen Montageabschnitts (35) erstrecken.

3. Heckkappe (30) nach Anspruch 1 oder 2, **dadurch gekennzeichnet, dass** der Montageabschnitt (35) neben der Montagefläche (37), in Axialrichtung (A) in Richtung Deckabschnitt (32) gesehen, eine zylindrische Zentrierfläche (38) aufweist, die eingerichtet ist, um während der Montage der Heckkappe (30) eine Zentrierung relativ zum Gehäuse (20) zu gewährleisten, indem die Zentrierfläche (38) einen Formschluss mit einer entsprechenden gehäuseseitigen Zentrierfläche (22b) des Gehäuses (20) eingeht.

4. Heckkappe (30) nach Anspruch 3, **dadurch gekennzeichnet, dass** der Durchmesser der Zentrierfläche (38), im Querschnitt senkrecht zur Axialrichtung (A) gesehen, kleiner als der entsprechende Durchmesser der Montagefläche (37) ist, wobei der Durchmesser der Zentrierfläche (38), im Querschnitt senkrecht zur Axialrichtung (A) gesehen, vorzugsweise dem Kerndurchmesser des Montagegewindes (36) entspricht.

5. Heckkappe (30) nach einem der vorigen Ansprüche, **dadurch gekennzeichnet, dass** der Montageabschnitt (35) neben der Montagefläche (37), in Axialrichtung (A) gegenüber dem Deckabschnitt (32) gesehen, eine zylindrische Dichtungsfläche (39) aufweist, die zur Abdichtung des Gehäuses (20) vorgesehen ist, indem zwischen der Dichtungsfläche (39) und einem entsprechenden Dichtungssitz (22c) des Gehäuses (20) eine Gehäusedichtung (15) installierbar ist.

6. Heckkappe (30) nach Anspruch 5, **dadurch gekennzeichnet, dass** der Durchmesser der Dichtungsfläche (39), im Querschnitt senkrecht zur Axialrichtung (A) gesehen, größer als der entsprechende Durchmesser der Montagefläche (37) ist.

7. Heckkappe (30) nach einem der vorigen Ansprüche, **dadurch gekennzeichnet, dass** die Propellerwellenöffnung (31) einen Dichtungssitz (31a) zur Aufnahme einer Wellendichtung (13) zur Abdichtung gegen die Propellerwelle (11) und/oder einen Lagersitz (31b) zur Aufnahme eines Lagers (14) zur drehbaren Lagerung der Propellerwelle (11) aufweist, wobei der Dichtungssitz (31a) vorzugsweise einen kleineren Durchmesser aufweist als der Lagersitz (31b), im Querschnitt senkrecht zur Axialrichtung (A) gesehen.

8. Heckkappe (30) nach einem der vorigen Ansprüche, **dadurch gekennzeichnet, dass** die Heckkappe (30) rotationssymmetrisch aufgebaut ist.

9. Heckkappe (30) nach einem der vorigen Ansprüche, **dadurch gekennzeichnet, dass** die Heckkappe (30) aus einem Kunststoff gefertigt ist.

10. Heckkappe (30) nach einem der vorigen Ansprüche, **dadurch gekennzeichnet, dass** die Heckkappe (30) einteilig gefertigt ist.

11. Antriebseinheit (10) für einen elektrischen Außenbordmotor (1), wobei die Antriebseinheit (10) aufweist:
ein Gehäuse (10) mit einer Heckkappe (30) nach einem der vorstehenden Ansprüche;
einen im Gehäuse (10) angeordneten Elektromotor (12) sowie eine vom Elektromotor (12) rotatorisch anzutreibende Propellerwelle (11), die sich in der Axialrichtung (A) im Gehäuse (10) und durch die Propellerwellenöffnung (31) abschnittsweise nach außen erstreckt.
